# EUROPÄISCHE PATENTSCHRIFT

(11) **EP 1 574 366 B1**
(45) Veröffentlichungstag und Bekanntmachung des Hinweises auf die Patenterteilung: **30.08.2006**
(21) Anmeldenummer: 05003809.0
(22) Anmeldetag: 23.02.2005
(51) Int. Cl.: B60G 7/00, B60G 9/00, B60G 11/46, B60G 11/113

(54) **Achsaufhängung und Federplatte für eine Achsanbindung**
Axle suspension and sping plate for an axle attachment
Suspension d'essieu et plaque de ressort pour la fixation de l'essieu

(30) Priorität: 09.03.2004 DE 102004011292
(43) Veröffentlichungstag der Anmeldung: 14.09.2005
(73) Patentinhaber: BPW Bergische Achsen KG, 51674 Wiehl (DE)
(72) Erfinder: Ebert, Jörg, 50858 Köln (DE); Michels, Manfred, 51067 Köln (DE); Kopplow, Hans Werner, 51588 Nümbrecht (DE)
(74) Vertreter: Christophersen & Partner

(56) Entgegenhaltungen:
- EP-A- 1 088 687
- EP-A- 1 273 464
- EP-A- 1 334 848
- DE-A- 10 110 495
- DE-A1- 3 148 015
- DE-A1- 19 946 802
- DE-C1- 4 224 965

## Beschreibung

Die vorliegende Erfindung betrifft eine Achsaufhängung für eine luftgefederte Fahrzeugachse mit einem Achskörper, den Achskörper an seinen beiden Enden kreuzenden Lenkerfedern sowie quer sowohl zu den Lenkerfedern wie auch zu dem Achskörper verlaufenden, diese Teile gegeneinander ziehenden Zugelementen, die sich einerseits gegenüber dem Achskörper und andererseits, dem Achskörper abgewandt, von außen gegenüber der Lenkerfeder abstützen.

Des weiteren betrifft die Erfindung ein Einzelteil einer solchen Achsaufhängung, nämlich eine Federplatte für die Abstützung von Zugelementen, welche den Achskörper einer Fahrzeugachse mit einer den Achskörper kreuzenden Lenkerfeder verbinden, wobei sich die Federplatte an der Außenseite der Lenkerfeder über vordere und hintere Stützflächen abstützt, die sich vor bzw. hinter dem Achskörper befinden und sich jeweils quer zur Zugrichtung der Zugelemente erstrecken.

Des weiteren betrifft die Erfindung ein weiteres Einzelteil einer solchen Achsaufhängung, nämlich eine Lenkerfeder zur Abstützung des Achskörpers einer luftgefederten Fahrzeugachse, mit einem vorderen Lenkerauge und einem dahinter angeordneten Längsabschnitt für die Achsanbindung.

Derartige Achsaufhängungen, Federplatten und Lenkerfedern sind z.B. aus der DE 101 10 495 A1 bekannt. Darin wird eine Vielzahl von Varianten zur Anbindung des Achskörpers an die Lenkerfeder über gerade oder U-förmige Zugstangen offenbart. Bei sämtlichen Ausführungsformen ist die maximale Einfederung der Luftfeder durch den Abstand zwischen der Lenkerfeder bzw. der an der Oberseite der Lenkerfeder, im Bereich der Achsaufhängung angeordneten Zugstangen und dem Fahrzeugrahmen beschränkt. Bei großer Einfederung schwenkt die Lenkerfeder so weit um ihren ortsfesten Drehpunkt in der Konsole, bis sie mit dem vom Drehpunkt am weitesten beabstandeten Bereich der Achsaufhängung gegen den Fahrzeugrahmen anstößt.

Der Abstand zwischen Lenkerfeder und Fahrzeugrahmen hat bei gleichbleibender Fahrzeughöhe Einfluß auf das Ladevolumen des Fahrzeugs, da sich durch Reduktion dieses Abstands eine Absenkung der Ladefläche erreichen läßt, wodurch andererseits die Ladehöhe steigt.

Der Erfindung liegt daher die Aufgabe zugrunde, eine in vertikaler Richtung und bei starker Einfederung möglichst kompakt bauende Achsaufhängung zu schaffen. Ferner soll eine Federplatte und eine Lenkerfeder geschaffen werden, die eine solche kompakt bauende Achsaufhängung ermöglichen.

Zur Lösung dieser Aufgabe wird hinsichtlich der Achsaufhängung vorgeschlagen, daß sich die Querschnittshöhe der Lenkerfeder auf dem Längsabschnitt der Achsanbindung nach hinten hin reduziert, und daß die hinter dem Achskörper angeordneten Zugelemente eine reduzierte Bauhöhe aufweisen.

Hinsichtlich der Federplatte wird zur Lösung der oben genannten Aufgabe vorgeschlagen, daß die hintere Stützfläche tiefer als die vordere Stützfläche angeordnet ist.

Hinsichtlich der Lenkerfeder wird zur Lösung der oben genannten Aufgabe vorgeschlagen, daß sich die Querschnittshöhe der Lenkerfeder auf dem Längsabschnitt der Achsanbindung nach hinten hin reduziert.

Auf diese Weise wird eine kompakte Bauweise erzielt, bei der der maximal erreichbare Einfederweg der Lenkerfeder gesteigert wird. Hierdurch läßt sich bei gleichbleibender maximaler Einfederung der Abstand zwischen der Lenkerfeder und dem Fahrzeugrahmen reduzieren, wodurch in der Fahrzeughöhe insgesamt ein Zugewinn an nutzbarer Ladehöhe und -volumen erzielt wird.

Die maximalen Belastungen der Lenkerfeder treten im Bereich der Achsanbindung auf, wobei die Belastungen in dem dem festen Drehpunkt der Lenkerfeder abgewandten Teil der Achsanbindung aufgrund der herschenden Hebelverhältnisse geringer sind, als im vorderen Teil der Achsanbindung. Zu den Enden der Lenkerfeder hin reduzieren sich die Belastungen stetig. Daher läßt sich die Querschnittshöhe der Lenkerfeder in dem hinteren, weniger stark belasteten Bereich der Achsanbindung reduzieren, ohne daß dies während des Fahrbetriebs zu einer Steigerung der Materialbelastung der Lenkerfeder in Folge der statischen und dynamischen Kräfte einschließlich der Torsionskräfte führt. Vielmehr können durch die Anpassung des Querschnitts gleichmäßige Spannungsverteilungen zumindest über den Bereich der Lenkerfeder, in dem diese mit dem Achskörper verbunden ist, erzeugt werden.

Besonders vorteilhaft ist darüber hinaus eine Achsaufhängung, bei der die Zugelemente Zugstangen sind, die sich gegenüber der Lenkerfeder über speziell gestaltete Federplatten abstützen, welche an der Oberfläche der Lenkerfeder anliegen und sich im wesentlichen quer zur Lenkerfeder bis über deren Rand hinaus erstrecken. Auf diese Weise wird es möglich, den Achskörper sicher an die ihren Querschnitt in Längsrichtung ändernde Lenkerfeder anzubinden, ohne daß Bohrungen o.ä., welche das Federverhalten der Lenkerfeder beeinträchtigen, die Lenkerfeder durchsetzen.

Zur Lagesicherung der Federplatten wird vorgeschlagen, daß diese jeweils über einen Steg, der im wesentlichen in Längsrichtung der Lenkerfeder verläuft, miteinander verbunden sind. Denkbar ist auch eine abgestufte, durchgehende Federplatte.

Ferner wird vorgeschlagen, daß jeweils zwei Zugstangen zu einem Bügel einstückig miteinander verbunden sind, die sich druckfest am Achskörper abstützen. Dies ermöglicht eine besonders einfache Montage der Zugstangen über jeweils zwei Verschraubungen an den den Bügeln gegenüberliegenden Enden.

Weitere Einzelheiten und Vorteile ergeben sich anhand der nachfolgenden Beschreibung der zugehörigen Zeichnungen, in denen zwei bevorzugte Ausführungsformen einer erfindungsgemäß ausgebildeten Achsaufhängung sowie ferner eine erfindungsgemäße Federplatte sowie eine erfindungsgemäße Lenkerfeder dargestellt sind. Die Zeichnungen zeigen:
- Fig. 1:: Prinzipdarstellung einer Achsaufhängung im Falle maximaler Einfederung der Luftfeder oder in deren drucklosem Zustand
- Fig. 2:: Einzelteilzeichnung der Lenkerfeder einer Achsaufhängung
- Fig. 3:: Vergrößerter Ausschnitt der Achsanbindung nach Fig. 1
- Fig. 4:: Vergrößerter Ausschnitt der Achsanbindung bei einer alternativ gestalteten Achsaufhängung

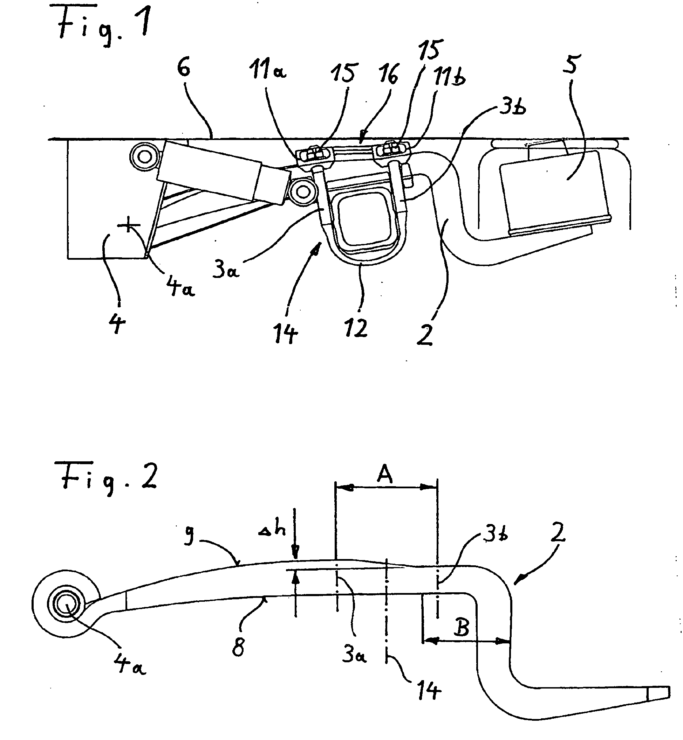

In Fig. 1 ist eine Achsaufhängung im Falle maximaler Einfederung der Luftfeder 5 oder in deren drucklosem Zustand in einer Seitenansicht dargestellt. Der als Vierkantrohr ausgebildete Achskörper 1 wird zur Anbindung an die Lenkerfeder 2 in der Achsanbindung 14 gehalten. Die die Funktion des Fahrzeug-Längslenkers übernehmende Lenkerfeder 2 ist an ihrem vorderen Ende mit einem Lenkerauge 4a versehen. Dieses bildet den Drehpunkt für die schwenkbare Lagerung der Lenkerfeder 2 an der festen Konsole 4. Das rückseitige Ende der Lenkerfeder 2 ist starr mit der Luftfeder 5 verbunden, die sich andererseits gegenüber dem Fahrzeugrahmen 6 abstützt.

In Fig. 2 ist die aus einem Federstahl gewalzte Lenkerfeder 2 der erfindungsgemäßen Achsaufhängung in einer gegenüber Fig. 1 leicht vergrößerten Darstellung dargestellt. Neben der eigentlichen Lenkerfeder 2 sind auch die quer zur Lenkerfeder 2 verlaufenden Symmetrieebenen eines vorderen Zugelements 3a und eines hinteren Zugelements 3b der Achsanbindung 14 schematisch dargestellt, sowie ferner die Mittelebene 1a des Achskörpers. Die Achsanbindung 14 erstreckt sich über den Längsabschnitt A der Lenkerfeder.

In Längsrichtung verläuft die Unterseite 8 der Lenkerfeder 2, an welcher der Achskörper 1 anliegt, über den gesamten Längsabschnitt A der Achsanbindung 14 sowie auch darüber hinaus im wesentlichen gerade. Die dem Achskörper 2 abgewandte Oberseite 9 der Lenkerfeder 2 hingegen ist im Bereich A der Achsanbindung 14 nach hinten hin abfallend ausgebildet, wodurch ein nach hinten hin sich anschließender Bereich B (Fig. 2) mit reduzierter Querschnittshöhe der Lenkerfeder 2 gebildet wird. Die vorderen Zugelemente 3a sind in dem Längsbereich der Lenkerfeder 2 angeordnet, dessen Querschnittshöhe gerade noch nicht reduziert ist. Die hinteren Zugelemente 3b hingegen befinden sich im Bereich B. Der Bereich B erstreckt sich dabei in Richtung auf die Symmetrieebene des Achskörpers 2 zu mindestens um die halbe Breite der Zugelemente 3b über deren Symmetrieebene hinaus. Durch diese Anordnung der Zugelemente 3a und 3b auf der Lenkerfeder 2 läßt sich die Bauhöhe der hinteren Zugelemente 3b um die Höhendifferenz Δh, die auch im wesentlichen der Reduzierung der Querschnittshöhe der Lenkerfeder 2 entspricht, gegenüber der Bauhöhe der vorderen Zugelemente 3a reduzieren.

Wie am besten aus Fig. 1 zu erkennen ist, dreht die Lenkerfeder 2 beim Einfedern aus ihrer im wesentlichen horizontalen Ausgangsstellung nur solange um den festen Drehpunkt 4a an der Konsole 4, bis sie mit den hinteren Befestigungselementen 3b am Fahrzeugrahmen anschlägt. Die Bauhöhe h₂ der hinteren Befestigungselemente 3b bestimmt somit den erreichbaren Schwenkwinkel der Lenkerfeder 2 und somit letztlich auch die erreichbare Einfederung des Achskörpers 1.

Daher ist es möglich, die vertikale Bauhöhe der gesamten Achsaufhängung durch Reduzieren der Bauhöhe der Zugelemente 3b bei gleichbleibendem Einfederweg des Achskörpers 1 zu verringern, wodurch sich z.B. die Ladefläche des Fahrzeugs absenken und bei gleicher Fahrzeuggesamthöhe ein Zugewinn an nutzbarem Ladevolumen erzielen läßt.

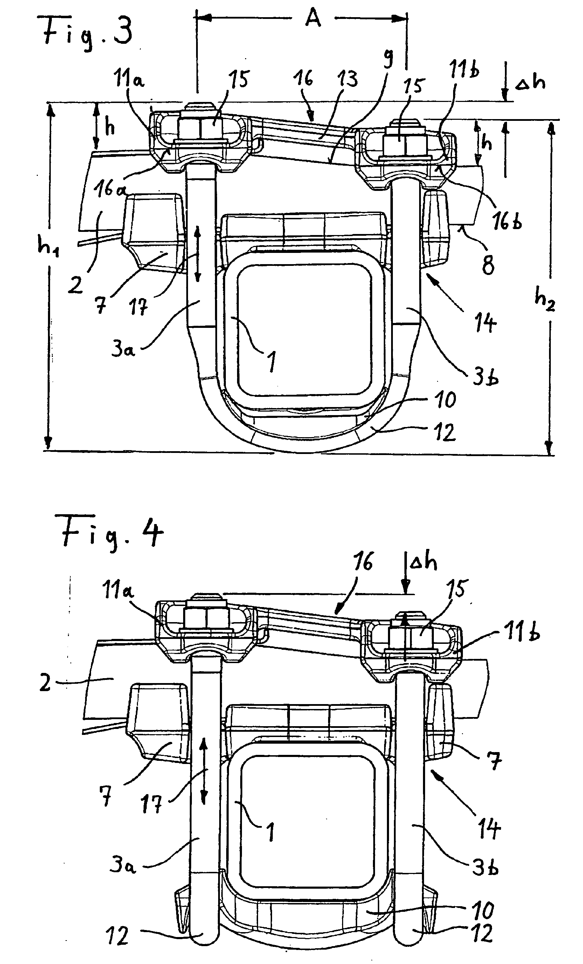

In Fig. 3 ist ein vergrößerter Ausschnitt der Achsanbindung 14 gemäß Fig. 1 dargestellt. Es ist zu erkennen, daß die Zugelemente Zugstangen 3a bzw. 3b sind, die quer zum Achskörper 1 über U-förmige Abschnitte zu einem Bügel 12 verbunden sind. Am oberen Ende der Zugstangen sind Gewindeabschnitte angeformt. Diese Gewindeabschnitte sind durch Federplatten 11a, 11b hindurchgesteckt, und über die Muttern 15 erfolgt eine Verspannung der Federplatte 11 gegen die Oberfläche 9 der Lenkerfeder 2. Die Federplatten 11a, 11b erstrecken sich dabei quer zu den Lenkerfedern 2 bis über deren Seitenränder hinaus. Zur Verbindung der beiden Federplattenabschnitte 11a, 11b untereinander ist ein im wesentlichen in Richtung der Lenkerfeder 2 verlaufender Steg 13 an seinen beiden Enden mit jeweils einer Federplatte 11a, 11b verbunden, wodurch sich eine an die Absenkung der Lenkerfeder angepaßte Gesamt-Federplatte 16 ergibt. Der vordere Federplattenabschnitt 11 a befindet sich in Längsrichtung vor dem Achskörper und der hintere Federplattenabschnitt 11b hinter dem Achskörper 1. An der Unterseite sind die Federplattenabschnitte jeweils mit Stützflächen 16a bzw. 16b versehen, mit denen sie sich jeweils auf der Oberseite 9 der Lenkerfeder 2 abstützen. Beide Stützflächen 16a, 16b sind so gestaltet, daß sie sich quer zur Zugrichtung 17 der Zugelemente 3a, 3b erstrecken. Auf diese Weise wird die in den Zugelementen 3a, 3b wirkende Zugkraft rechtwinklig und damit querkraftfrei auf die Oberseite 9 der Lenkerfeder übertragen.

Wegen des Abfallens der Oberseite der Lenkerfeder 9 nach hinten hin, verbunden mit einer Reduzierung der Querschnittshöhe der Lenkerfeder, ist auch die hintere Stützfläche 16b in einer tieferen Ebene, als die vordere Stützfläche 16a angeordnet. Die Stützflächenebenen sind daher parallel zueinander, jedoch in unterschiedlichen Höhen. Der Steg 13 verbindet den vorderen Federplattenabschnitt 11a mit dem hinteren Federplattenabschnitt 11b, und dient daher zur zusätzlichen Stabilisierung der Kraftangriffspunkte der Zugstangen 3a, 3b. Der Steg 13 ist zwischen dem vorderen, höher gelegenen Federplattenabschnitt 11a und dem hinteren, tiefer gelegenen Federplattenabschnitt 11b schräg abfallend gestaltet. Die gesamte Federplatte 16 einschließlich der beiden Federplattenabschnitte 11a, 11b und des Steges 13 ist einstückig ausgeführt, vorzugsweise als Guß- oder Schmiedeteil.

Zwischen der Lenkerfeder 2 und dem Achskörper 1 befindet sich eine vorzugsweise in Gußtechnik hergestellte Achsplatte 7 und unterhalb des Achskörpers 1 ein der Bügelform angepasster und ebenfalls vorzugsweise in Schmiedetechnik hergestellter Achslappen 10. Sowohl Achslappen 10 wie auch Achsplatte 7 dienen zur Übertragung der durch die Zugelemente 3a und 3b laufenden Kräfte, durch welche der Achskörper 1 auf dem Längsabschnitt A an die Lenkerfeder 2 angebunden ist.

Darüber hinaus ist in Fig. 3 die Reduzierung der Querschnittshöhe der Lenkerfeder 2 über den Bereich A der Achsanbindung 14 zu erkennen, durch welche das hintere Zugelement 3b eine gegenüber Zugelement 3a um die Differenz Δh reduzierte Bauhöhe aufweist.

Auch bei der in Fig. 4 dargestellten weiteren Ausführungsform der erfindungsgemäßen Achsaufhängung wird die reduzierte Bauhöhe der Zugelemente 3b um die Differenz Δh, welche im wesentlichen der Reduzierung der Querschnittshöhe der Lenkerfeder 2 entspricht, erreicht. Im Gegensatz zu der in Fig. 3 dargestellten Ausgestaltung sind die Zugelemente 3b bzw. 3a jeweils im wesentlichen parallel zum Achskörper 1 und mit den gegenüberliegenden Zugelementen 3a bzw. 3b über die im wesentlichen U-förmig ausgebildete Bügel 12 einstückig verbunden. Aus diesem Grund ist es erforderlich, daß der Achslappen 10 am unteren Ende des Achskörpers 1 über diesen hinaus ragt und Aufnahmen bildet, an denen sich die Zugelemente 3a bzw. 3b druckfest abstützen können.

Neben den beiden in den Figuren dargestellten Varianten ist eine Vielzahl weiterer konstruktiver Ausgestaltungen der Achsanbindung 14, bei welchen beispielsweise die Zugelemente 3a, 3b nicht einstückige Bügel 12, sondern gerade Bolzen sind, denkbar, bei welchen ebenfalls die geringe Bauhöhe h₂ des hinteren Zugelements 3b gegenüber der Bauhöhe h₁ des vorderen Zugelements 3a erfindungsgemäß zur Reduktion der Aufbauhöhe der gesamten Achsaufhängung dient.

### Bezugszeichenliste

- 1: Achskörper
- 1a: Mittellinie
- 2: Lenkerfeder
- 3a: Zugelement
- 3b: Zugelement
- 4: Konsole
- 4a: Drehpunkt, Lenkerauge
- 5: Luftfeder
- 6: Fahrzeugrahmen
- 7: Achsplatte
- 8: Unterseite der Lenkerfeder
- 9: Oberseite der Lenkerfeder
- 10: Achslappen
- 11a: Federplattenabschnitt
- 11b: Federplattenabschnitt
- 12: Bügel
- 13: Steg
- 14: Achsanbindung
- 15: Mutter
- 16: Federplatte
- 16a: Stützfläche
- 16b: Stützfläche
- 17: Zugrichtung

- A: Längsabschnitt
- B: Bereich reduzierter Querschnittshöhe der Lenkerfeder
- h₁: Bauhöhe
- h₂: Bauhöhe
- Δh: Höhendifferenz

## Patentansprüche

1. Achsaufhängung für eine luftgefederte Fahrzeugachse mit einem Achskörper (1), den Achskörper (1) an seinen beiden Enden kreuzenden Lenkerfedern (2) sowie quer sowohl zu den Lenkerfedern (2) wie auch zu dem Achskörper (1) verlaufenden, diese Teile gegeneinander ziehenden Zugelementen (3a, 3b), die sich einerseits gegenüber dem Achskörper (1) und andererseits, dem Achskörper (1) abgewandt, von außen gegenüber der Lenkerfeder (2) abstützen,
**dadurch gekennzeichnet,**
**daß** sich die Querschnittshöhe der Lenkerfeder (2) auf dem Längsabschnitt (A) der Achsanbindung (14) nach hinten hin reduziert, und daß die hinter dem Achskörper (1) angeordneten Zugelemente (3b) eine reduzierte Bauhöhe (h₂) aufweisen.

2. Achsaufhängung nach Anspruch 1, **dadurch gekennzeichnet, daß** der Achskörper (1) unter der Lenkerfeder (2) angeordnet ist.

3. Achsaufhängung nach einem der Ansprüche 1 oder 2, **dadurch gekennzeichnet, daß** Zugelemente (3a, 3b) Zugstangen sind, die sich gegenüber der Lenkerfeder (2) über mindestens eine Federplatte (11; 16) abstützen, die an der Oberfläche (9) der Lenkerfeder (2) anliegt und sich quer zur Lenkerfeder (2) bis über deren Rand hinaus erstreckt.

4. Achsaufhängung nach Anspruch 3, **dadurch gekennzeichnet, daß** die Federplatten (11) jeweils über einen Steg (13), der im wesentlichen in Längsrichtung der Lenkerfeder (2) verläuft, miteinander verbunden sind.

5. Achsaufhängung nach Anspruch 1, **dadurch gekennzeichnet, daß** jeweils zwei Zugstangen (3a, 3b) über Bügel (12) einstückig miteinander verbunden sind, die sich druckfest am Achskörper (1) abstützen.

6. Federplatte für die Abstützung von Zugelementen, welche den Achskörper einer Fahrzeugachse mit einer den Achskörper kreuzenden Lenkerfeder verbinden, wobei sich die Federplatte (16) an der Außenseite der Lenkerfeder über vordere und hintere Stützflächen (16a, 16b) abstützt, die sich vor bzw. hinter dem Achskörper befinden und sich jeweils quer zur Zugrichtung der Zugelemente erstrecken,
**dadurch gekennzeichnet,**
**daß** die hintere Stützfläche (16b) tiefer als die vordere Stützfläche (16a) angeordnet ist.

7. Federplatte nach Anspruch 6, **dadurch gekennzeichnet, daß** diese einen vorderen Federplattenabschnitt (11a), an dessen Unterseite die vordere Stützfläche (16a) ausgebildete ist, und einen hinteren Federplattenabschnitt (11b), an dessen Unterseite die hintere Stützfläche (16b) ausgebildet ist aufweist, und daß vorderer und hinterer Federplattenabschnitt (11a, 11b) in Lenkerfeder-Längsrichtung über einen Steg (13) miteinander verbunden sind.

8. Federplatte nach Anspruch 7, **dadurch gekennzeichnet, daß** der Steg (13) zwischen dem vorderen Federplattenabschnitt (11a) und dem hinteren Federplattenabschnitt (11b) schräg abfallend gestaltet ist.

9. Lenkerfeder zur Abstützung des Achskörpers einer luftgefederten Fahrzeugachse, mit einem vorderen Lenkerauge (4a) und einem dahinter angeordneten Längsabschnitt (A) für die Achsanbindung,
**dadurch gekennzeichnet,**
**daß** sich die Querschnittshöhe der Lenkerfeder auf dem Längsabschnitt (A) der Achsanbindung nach hinten hin reduziert.

10. Lenkerfeder nach Anspruch 9, **dadurch gekennzeichnet, daß** die Querschnittsbreite der Lenkerfeder im Längsabschnitt (A) der Achsanbindung gleich bleibend ist.

## Claims

1. Axle suspension for an air-sprung vehicle axle, comprising an axle body (1), leaf springs (2) which cross over the axle body (1) at its two ends, and also tension elements (3a, 3b) which run transversely both with respect to the leaf springs (2) and with respect to the axle body (1) and which draw these parts towards one another, said tension elements being supported at one side on the axle body (1) and at the other side, remote from the axle body (1), on the outer side of the leaf spring (2), **characterized in that** the cross-sectional height of the leaf spring (2) on the longitudinal section (A) of the axle attachment (14) becomes smaller towards the rear, and **in that** the tension elements (3b) arranged behind the axle body (1) have a reduced height (h₂).

2. Axle suspension according to Claim 1, **characterized in that** the axle body (1) is arranged below the leaf spring (2).

3. Axle suspension according to one of Claims 1 or 2, **characterized in that** the tension elements (3a, 3b) are tension rods which are supported on the leaf spring (2) via at least one spring plate (11; 16), which spring plate bears against the upper face (9) of the leaf spring (2) and extends transversely to the leaf spring (2) and beyond the edge thereof.

4. Axle suspension according to Claim 3, **characterized in that** the spring plates (11) are connected to one another in each case via a web (13) which runs essentially in the longitudinal direction of the leaf spring (2).

5. Axle suspension according to Claim 1, **characterized in that** in each case two tension rods (3a, 3b) are connected to one another via clips (12) to form a single piece, which clips are supported in a pressure-resistant manner on the axle body (1).

6. Spring plate for supporting tension elements which connect the axle body of a vehicle axle to a leaf spring which crosses over the axle body, wherein the spring plate (16) is supported on the outer side of the leaf spring via front and rear supporting faces (16a, 16b) which are located in front of and behind the axle body and extend in each case transversely to the direction of tension of the tension elements, **characterized in that** the rear supporting face (16b) is arranged lower than the front supporting face (16a).

7. Spring plate according to Claim 6, **characterized in that** said spring plate has a front spring plate section (11a), on the underside of which the front support face (16a) is formed, and a rear spring plate section (11b), on the underside of which the rear supporting face (16b) is formed, and **in that** the front and rear spring plate sections (11a, 11b) are connected to one another via a web (13) in the longitudinal direction of the leaf spring.

8. Spring plate according to Claim 7, **characterized in that** the web (13) is configured to slope down at an angle between the front spring plate section (11a) and the rear spring plate section (11b).

9. Leaf spring for supporting the axle body of an air-sprung vehicle axle, comprising a front leaf spring eye (4a) and a longitudinal section (A) arranged therebehind for the axle attachment, **characterized in that** the cross-sectional height of the leaf spring on the longitudinal section (A) of the axle attachment becomes smaller towards the rear.

10. Leaf spring according to Claim 9, **characterized in that** the cross-sectional width of the leaf spring in the longitudinal section (A) of the axle attachment remains constant.

## Revendications

1. Suspension d'essieu pour un essieu de véhicule à suspension pneumatique avec un corps d'essieu (1), des ressorts de bras (2) croisant le corps d'essieu (1) à ses deux extrémités ainsi que des éléments de traction (3a, 3b) s'étendant transversalement à la fois aux ressorts de bras (2) et au corps d'essieu (1) et tirant ces pièces les unes contre les autres, éléments qui s'appuient d'une part contre le corps d'essieu (1) et d'autre part, à l'opposé du corps d'essieu (1), depuis l'extérieur contre le ressort de bras (2),
**caractérisée en ce que** la hauteur de section des ressorts de bras (2) sur la partie longitudinale (A) de l'attache d'essieu (14) diminue en direction de l'arrière, et **en ce que** les éléments de traction (3b) placés derrière le corps d'essieu (1) présentent une hauteur réduite (h₂).

2. Suspension d'essieu selon la revendication 1, **caractérisée en ce que** le corps d'essieu (1) est placé sous le ressort de bras (2).

3. Suspension d'essieu selon l'une des revendications 1 ou 2, **caractérisée en ce que** des éléments de traction (3a, 3b) sont des barres de traction qui s'appuient sur le ressort de bras (2) par l'intermédiaire d'au moins une plaque de ressort (11 ; 16) qui repose sur la surface (9) du ressort de bras (2) et s'étend transversalement au ressort de bras (2) au-delà de son bord.

4. Suspension d'essieu selon la revendication 3, **caractérisée en ce que** les plaques de ressort (11) sont reliées entre elles à chaque fois par une barre (13) qui s'étend pour l'essentiel dans la direction longitudinale du ressort de bras (2).

5. Suspension d'essieu selon la revendication 1, **caractérisée en ce que** deux barres de traction (3a, 3b) sont reliées solidairement entre elles par des arceaux (12) qui s'appuient sur le corps d'essieu (1) d'une manière résistant à la pression.

6. Plaque de ressort pour le soutien d'éléments de traction qui relient le corps d'essieu d'un essieu de véhicule à un ressort de bras croisant le corps d'essieu, la plaque de ressort (16) s'appuyant contre la face extérieure du ressort de bras par l'intermédiaire de surfaces d'appui antérieures et postérieures (1 6a, 16b) qui se trouvent devant resp. derrière le corps d'essieu et s'étendent chacune transversalement à la direction de traction des éléments de traction,
**caractérisée en ce que**
la surface d'appui postérieure (16b) est placée plus bas que la surface d'appui antérieure (16a).

7. Plaque de ressort selon la revendication 6, **caractérisée en ce qu'**elle présente une section antérieure (11a) de plaque de ressort sur la face inférieure de laquelle est formée la surface d'appui antérieure (16a) et une section postérieure (11b) de plaque de ressort sur la face inférieure de laquelle est formée la surface d'appui postérieure (16b), et **en ce que** les sections de plaque de ressort antérieure et postérieure (11a, 11b) sont reliées entre elles par une barre (13), dans la direction longitudinale du ressort de bras.

8. Plaque de ressort selon la revendication 7, **caractérisée en ce que** la barre (13) est réalisée en descente à l'oblique entre la section antérieure (11a) de plaque de ressort et la section postérieure (11b) de plaque de ressort.

9. Ressort de bras destiné à soutenir le corps d'essieu d'un essieu de véhicule à suspension pneumatique, avec un oeillet de bras antérieur (4a) et une section longitudinale (A) placée derrière pour l'attache d'essieu,
**caractérisé en ce que** la hauteur de section du ressort de bras diminue vers l'arrière sur la partie longitudinale (A) de l'attache d'essieu.

10. Ressort de bras selon la revendication 9, **caractérisé en ce que** la largeur de section du ressort de bras reste constante sur la partie longitudinale (A) de l'attache d'essieu.
